# EUROPEAN PATENT APPLICATION

(11) **EP 2 852 215 A1**
(43) Date of publication of application: **25.03.2015**
(21) Application number: 13832157.5
(22) Date of filing: 14.08.2013
(51) Int. Cl.: H04W 36/08

(54) **SOURCE-SIDE AND TARGET-SIDE COMMUNICATION SWITCHING DEVICES, COMMUNICATION SYSTEM AND CALL SWITCHING METHOD**

(30) Priority: 29.08.2012 CN 201210310429
(71) Applicant: ZTE Corporation, Shenzhen, Guangdong 518057 (CN)
(72) Inventor: SUN, Wei, Shenzhen Guangdong 518057 (CN); ZHANG, Rong, Shenzhen Guangdong 518057 (CN)
(74) Representative: D'Halleweyn, Nele Veerle Trees Gertrudis
(86) International application number: PCT/CN2013/081428
(87) International publication number: WO 2014/032520

(57) **Abstract**

Source-side and target-side handover communication devices, a communication system and call handover method are provided, wherein the source-side handover communication device determines the type of a call which a user equipment currently needs to hand over, and when determining that the type of the call is a preset type, the source-side handover communication device configures identification information indicating the type of the call in a handover request message, and then sends the handover request message to a target-side handover communication device; the target-side handover communication device obtains the type of the call which the user equipment currently needs to hand over according to the request message, and then selects a corresponding handover strategy according to the obtained type, so as to avoid the occurrence of the case in which the handover is wrongly rejected because the type of the call cannot be effectively identified, thereby improving the handover success rate.

## Description

### Technical Field

The present invention relates to the field of handover communication technologies, and more particularly, to source-side and target-side handover communication devices, a communication system and a call handover method.

### Background of the Invention

When a user equipment (UE) accesses the network and accepts emergency call services, a RRC connection establishment cause value is carried in a radio resource control (RRC) connection establishment request message to indicate whether this access is an emergency call or not. The 3GPP protocol defines that for users of emergency call type, the network side needs to ignore restrictions on the access and handover of those users. In the current LTE system, the network side needs to reserve a specific allocation and retention priority (ARP) for the emergency call service. In an inter-station handover process in the LTE system, an evolved Node B (eNodeB) can determine whether the UE has an emergency call service according to the ARP information of the E-RAB (E-UTRAN Radio Access Bearer; E-UTRAN: Evolved Universal Terrestrial Radio Access Network) established by the UE. However, there is no definite standard regulations so far for the method for reserving the ARP for emergency call. When implementing a device, there is no uniform standard for reserving which kind of ARP for the emergency call in the implementation modes and setting standards of various manufacturers and operators, resulting in that the target-side network of the handover cannot make a correct judgment on whether the UE has an emergency call service in the handover process of cross public land mobile networks (PLMN) or cross communication systems, and further resulting in the occurrence of the case in which the restriction information of handover is also applied to the UE having emergency calls so as to reject the handover of the UE having emergency calls.

### Summary of the Invention

To solve the key technical problem, the embodiment of the present invention provides source side and target-side handover communication devices, a communication system, and a call handover method to solve the problem of the low success rate of handover resulted from the handover being wrongly rejected because the type of the call cannot be effectively identified.

To solve the abovementioned technical problem, the following technical solution is used:
a source-side handover communication device is provided, wherein the source-side handover communication device is configured to: determine the type of a call which a user equipment currently needs to hand over, when determining that the type of the call is a preset type, configure identification information indicating the type of the call in a handover request message, and then send the handover request message to a target-side handover communication device; and control the user equipment to complete a handover after receiving a handover request acknowledge message fed back by the target-side handover communication device.

Alternatively, the source-side handover communication device is a source eNodeB.

Alternatively, the source-side handover communication device comprises a source eNodeB and a source mobility management entity, wherein:
the source eNodeB is configured to: determine the type of the call which the user equipment currently needs to hand over, when determining that the type of the call is the preset type, configure the identification information indicating the type of the call in the handover request message, and then send the handover request message to the source mobility management entity; and control the user equipment to complete the handover after receiving a handover request acknowledge message sent by the source mobility management entity;
the source mobility management entity is configured to: receive and send the handover request message to the target-side handover communication device; also receive and send a handover request acknowledge message fed back by the target-side handover communication device to the source eNodeB.

Alternatively, the source-side handover communication device comprises a source radio access network access device and a source core network, wherein:
the source radio access network access device is configured to: determine the type of a call which the user equipment currently needs to hand over, and when determining that the type of the call is a preset type, configure identification information indicating the type of the call in a handover request message, and then send the handover request message to the source core network; control the user equipment to complete the handover after receiving a handover request acknowledge message sent by the source core network;
the source core network is configured to: receive and send the handover request message to the target-side handover communication device, and further receive and send a handover request acknowledge message fed back by the target-side handover communication device to the source radio access network access device.

A target-side handover communication device is provided, wherein the target-side handover communication device is configured to: receive a handover request message sent by a source-side handover communication device, obtain the type of the call which the user equipment currently needs to hand over according to the request message, select a corresponding handover strategy according to the obtained type, and send a handover request acknowledge message to the source-side handover communication device.

Alternatively, the target-side handover communication device is a target eNodeB.

Alternatively, the target-side handover communication device comprises a target mobility management entity and the target eNodeB, wherein:
the target mobility management entity is configured to: receive a handover request message sent by the source-side handover communication device and send the received handover request message to the target eNodeB, and also send a handover request acknowledge message sent by the target eNodeB to the source-side handover communication device;
the target eNodeB is configured to: receive the handover request message sent by the target mobility management entity, obtain the type of the call which the user equipment currently needs to hand over according to the request message, select a corresponding handover strategy according to the obtained type, and send a handover request acknowledge message to the source-side handover communication device via the target mobility management entity.

Alternatively, the target-side handover communication device comprises a target core network and a target radio access network access device, wherein:
the target core network is configured to: receive the handover request message sent by the source-side handover communication device, and send the received handover request message to the target radio access network access device, and also send the handover request acknowledge message sent by the target core network to the source-side handover communication device;
the target radio access network access device is configured to: receive the handover request message sent by the target core network, obtain the type of the call which the user equipment currently needs to hand over according to the request message, select a corresponding handover strategy according to the obtained type, and send a handover request acknowledge message to the source-side handover communication device via the target core network.

A communication system, comprising any one of the abovementioned source-side handover communication device and any one of the abovementioned target-side handover communication device; the source-side handover communication device is communicating with the target-side handover communication device.

A call handover method, comprises:
a source-side handover communication device determining the type of a call which a user equipment currently needs to hand over, when determining that the type of the call is a preset type, configuring identification information indicating the type of the call in a handover request message, and sending the handover request message to a target-side handover communication device;
the target-side handover communication device receiving the handover request message, obtaining the type of the call which the user equipment currently needs to hand over according to the request message, selecting a corresponding handover strategy according to the obtained type, and sending a handover request acknowledge message to the source-side handover communication device;
after receiving the handover request acknowledge message fed back by the target-side handover communication device, the source-side handover communication device controlling the user equipment to complete a handover.

Alternatively, the preset type is an emergency call type, and the identification information is identification information of the emergency call.

In the source-side and target-side handover communication devices, the communication system and the call handover method of the abovementioned technical solution, the source-side handover communication device determines the type of the call which the user equipment currently needs to hand over, and when determining that the type of the call is the preset type, the source-side handover communication device configures identification information indicating the type of the call in a handover request message and then sends the handover request message to the target-side handover communication device; the target-side handover communication device obtains the type of the call which the user equipment currently needs to hand over according to the request message, and then selects a corresponding handover strategy according to the obtained type, so as to cooperate with the source-side handover communication device to complete the handover. That is, when determining that the type of the call is the preset type, the source-side handover communication device of the above-mentioned technical solution may configure the identification of that type in the handover request message, the target-side handover communication device obtains the type of the call according to the identification information and further selects the corresponding handover strategy, so as to avoid the occurrence of the case in which the handover is wrongly rejected because the type of the call can not be effectively identified, thereby improving the handover success rate.

### Brief Description of the Drawings

FIG. 1 is a schematic diagram of the process of a call handover method in accordance with an embodiment of the present invention;
FIG. 2 is a structural diagram of a communication system in accordance with an embodiment of the present invention;
FIG. 3 is a first flow chart of the process of handing over an emergency call service within an E-UTRAN system in accordance with an embodiment of the present invention;
FIG. 4 is a second flow chart of the process of handing over an emergency call service within an E-UTRAN system in accordance with an embodiment of the present invention;
FIG. 5 is a flow chart of the process of handing over an emergency call service from an E-UTRAN system to other systems in accordance with an embodiment of the present invention;
FIG. 6 is a flow chart of the process of handing over an emergency call service from another system to an E-UTRAN system in accordance with an embodiment of the present invention.

### Preferred Embodiments of the Invention

Hereinafter in conjunction with the accompanying drawings, the present invention will be described in further detail with the specified embodiments.

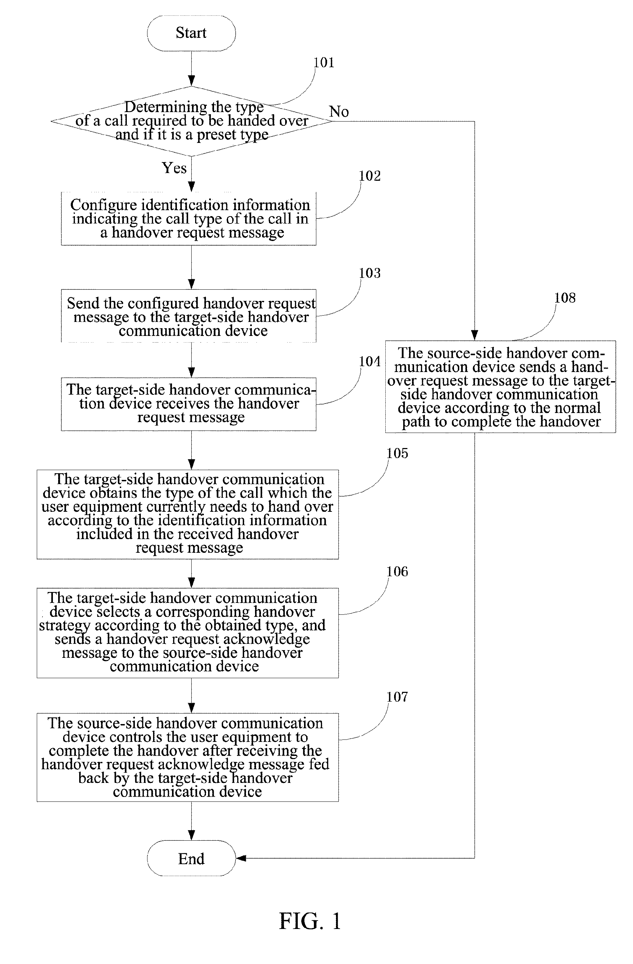

Referring to FIG. 1, in this embodiment, when the user equipment detects other cells or systems (called the target-side network) in which the signal quality is better than that of the current serving cell in the process of executing a call service and needs to hand over to the target-side network, it comprises the following steps:
step 101: the source-side handover communication device determines the type of the call which the user equipment currently needs to hand over, and determines whether it is a preset type or not; when the judgment result is YES, it proceeds to step 102; otherwise, it proceeds to step 108;
step 102: the source-side handover communication device configures the identification information indicating the call type of the call in a handover request message;
step 103: the source-side handover communication device sends the configured handover request message to the target-side handover communication device;
step 104: the target-side handover communication device receives the handover request message;
step 105: the target-side handover communication device obtains the type of the call which the user equipment currently needs to hand over according to the identification information included in the received handover request message;
step 106: the target-side handover communication device selects a corresponding handover strategy according to the obtained type, and sends a handover request acknowledge message to the source-side handover communication device;
step 107: the source-side handover communication device controls the user equipment to complete the handover after receiving the handover request acknowledge message fed back by the target-side handover communication device.
step 108: the source-side handover communication device sends a handover request message to the target-side handover communication device according to the normal path to complete the handover.

It can be seen that, when determining that the type of the call is the preset type, the source-side handover communication device in the present embodiment can configure the identification of that type in the handover request message, and the target-side handover communication device can obtain the type of the call according to the identification information and further select the corresponding handover strategy, so as to avoid the occurrence of the case in which the handover is wrongly rejected because the type of the call cannot be effectively identified, thereby improving the handover success rate.

In the present embodiment, the abovementioned preset type can be selected and set according to the practical conditions, and different types of calls can correspond to the identification information identifying the corresponding types; for a better understanding of the present invention, in the following, taking the preset type as the emergency call type and the identification information as the identification information of the emergency call for example in the present embodiment to further describe the present invention in detail.

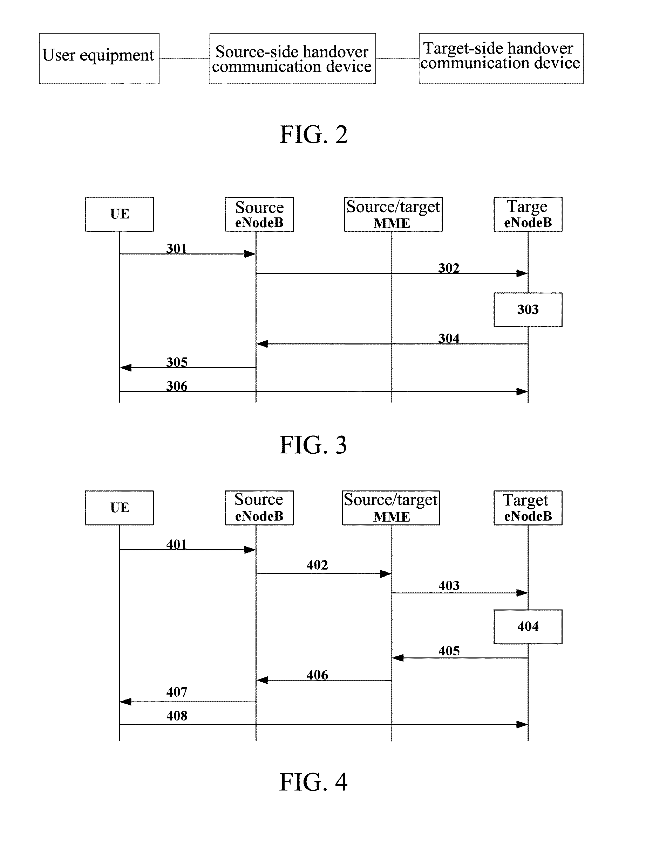

Refereing to FIG. 2, the communication system in the present embodiment comprises the user equipment, the source-side handover communication device and the target-side handover communication device, wherein:
the source-side handover communication device is configured to: determine the type of the call which the user equipment currently needs to hand over, and when determining that the type of the call is an emergency call type, configure the identification information indicating the emergency call type in a handover request message, and then send the handover request message to the target-side handover communication device;
the target-side handover communication device is configured to: obtain the type of the call which the user equipment currently needs to hand over in accordance with the request message, and then select a corresponding handover strategy according to the obtained type, so as to cooperate with the source-side handover communication device to complete the handover.

It should be noted that, the handover initiated by the user equipment may be a handover within the network system or a handover between different systems in the present embodiment, in different application environments, the source-side and target-side handover communication devices in the present embodiment can be selected and set according to the actual application environments. For example:
when handing over within the system, the source-side handover communication device can be the source eNodeB, the target-side handover communication device can be the target eNodeB;
alternatively, the source-side handover communication device may comprise the source eNodeB and the source Mobility Management Entity (MME), and the target-side communication device may comprise the target eNodeB, and in the case that the MME is changed, it may also comprise the target MME cooperating with the source MME and the target eNodeB; in this case the source eNodeB is configured to: determine the type of the call which the user equipment currently needs to hand over, when determining that the type of the call is the preset type (that is, the emergency call type), configure the identification information indicating the type of the call in the handover request message, and then send the handover request message to the source MME; it is further configured to: control the user equipment to complete the handover after receiving a handover request acknowledge message sent by the source MME; the source MME is used to receive and send the handover request message sent by the source eNodeB to the target-side handover communication device, and further configured to: receive and send the handover request acknowledge message fed back by the target-side handover communication device to the source eNodeB; the target MME is used to receive the handover request message sent by the source MME, and send the received handover request message to the target eNodeB, and further configured to: send the handover request acknowledge message sent by the target eNodeB to the source-side handover communication device; the target eNodeB is used to receive the handover request message sent by the target MME, obtain the type of the call which the user equipment currently needs to hand over according to the request message, and select the corresponding handover strategy in accordance with the obtained type, and send a handover request acknowledge message to the source-side handover communication device via the target MME. When the target MME is not included, the target eNodeB can directly complete the abovementioned information interaction with the source MME.

When the source-side handover communication device in the present embodiment comprises the source eNodeB and the source MME, it can also be used for the handover between different systems, in this case the target-side handover communication device may comprise the target Radio Access Network (RAN) access device and the target core network. When used for the handover between different systems, the source-side handover communication device in the present embodiment may further comprise the source RAN access device and the source core network, in this case the target-side handover communication system may comprise the target eNodeB and the target MME.

It can be seen from the above description that, the source-side and target-side handover communication devices may be specifically configured according to the specific application environments in the present embodiment, and for better understanding, the E-UTRAN system will be taken as an example for detailed description in the following.

Refereing to FIG. 3, it shows a flow chart of the process of X2 handover of emergency call service within the E-UTRAN system. In this case the source-side handover communication device is the source eNodeB, the target-side handover communication device is the target eNodeB, and the specific process is as follows:
step 301: the UE which is performing the emergency call service reports a Measurement Report message to indicate the cell whose signal quality measured by the UE is better than that of the current serving cell;
step 302: the source eNodeB determines the target cell according to the measurement report from the UE, and further decides to initiate an X2 handover, in particular, the source eNodeB determines that the type of the UE's current call is the emergency call type, configures the identification information of the emergency call type in a HANDOVER REQUEST message and then sends the configured handover request message to the target eNodeB, and the identification information of the emergency call included in the message indicates that the UE of this handover is a UE having emergency calls;
step 303: after the target eNodeB receives the handover request message, it knows that the UE of this handover is a UE having emergency calls according to the identification information in the message and then selects the strategy of the UE having emergency calls, performing the target-side processing of handover;
step 304: the target eNodeB feeds back a HANDOVER REQUEST ACKNOWLEDGE message to the source eNodeB;
step 305: the source eNodeB sends a RRC connection reconfiguration message to the UE to indicate the UE to leave the source eNodeB and access the target eNodeB;
step 306: the UE sends a RRC connection reconfiguration complete message to the target eNodeB, and the handover is successful, and the UE continues the emergency call service in the target eNodeB side.

Refereing to FIG. 4, it is a flow chart of the process of S1 handover of the emergency call service within the E-UTRAN system, in this case the source-side handover communication device comprises the source eNodeB and the source MME; the target-side handover communication device comprises the target eNodeB, and if the MME is changed in the handover process, the target-side handover communication device further comprises the target MME; the specific process is as follows:
step 401: the UE which is currently performing the emergency call service reports a Measurement Report message to indicate the cell whose signal quality measured by the UE is better than that of the current serving cell;
step 402: the source eNodeB determines the target cell according to the measurement report from the UE, and further decides to initiate a S1 handover, in particular, the source eNodeB determines that the type of the UE's current call is the emergency call type, configures the identification information of the emergency call type in the HANDOVER REQUEST message, and then sends the configured handover request message to the source MME, and the identification information of the emergency call included in the message indicates that the UE of this handover is a UE having emergency calls;
step 403: the source MME sends the received handover request message to the target eNodeB; if the MME is changed, the source MME sends the handover request message to the target MME, and then the target MME sends it to the target eNodeB;
step 404: after receiving the handover request message, the target eNodeB knows that the UE of this handover is a UE having emergency calls according to the identification information in the message, and then selects the strategy of the UE having emergency calls, performing the target-side processing of handover;
step 405: the target eNodeB returns a HANDOVER REQUEST ACKNOWLEDGE message to the source MME; if the MME is changed, the target eNodeB sends the handover request acknowledge message to the target MME, and then the target MME sends the handover request acknowledge message to the source MME;
step 406: the source MME sends a HANDOVER COMMAND message to the source eNodeB to indicate the source eNodeB to start to hand over;
step 407: the source eNodeB sends a RRC connection reconfiguration message to the UE to indicate the UE to leave the source eNodeB and access the target eNodeB;
step 408: the UE sends a RRC connection reconfiguration complete message to the target eNodeB, and the handover is successful, and the UE continues the emergency call service in the target eNodeB side.

The present invention is described by taking the handover within the system for example in the above description, and in the following, the present invention is further described by taking the handover between systems for example:

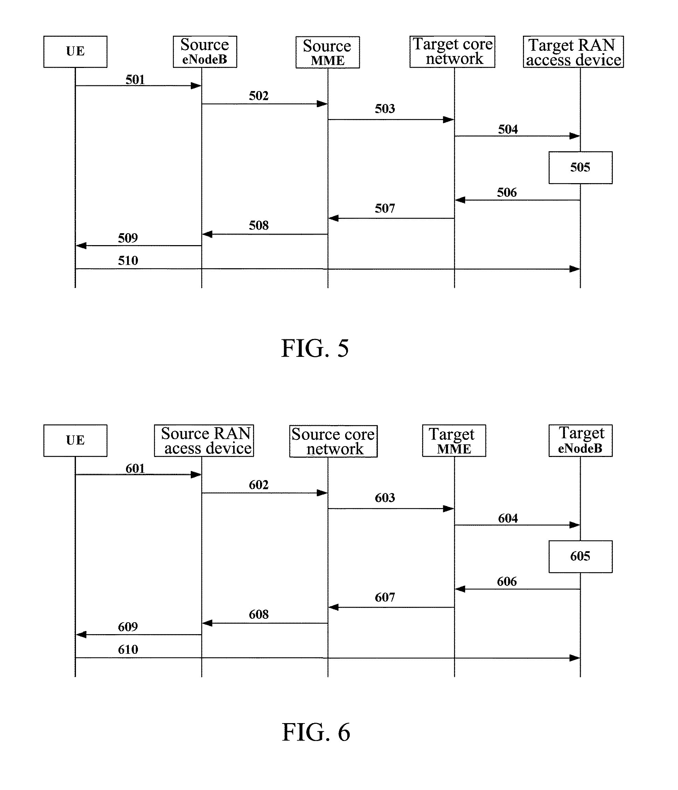

Refereing to FIG. 5: it is a flow chart of the process of handing over the emergency call service from the E-UTRAN system to other systems. In this case the source-side handover communication device comprises the source eNodeB and the source MME. The target-side handover communication device comprises the target core network and the target radio access network (RAN) access device, and the specific process is as follows:
step 501: the UE which is currently performing the emergency call service reports a Measurement Report message to indicate the cell whose signal quality measured by the UE is better than that of the current serving cell;
step 502: the source eNodeB determines the target cell according to the measurement report from the UE, and further decides to initiate a handover between different systems, in particular, the source eNodeB determines that the type of the UE's current call is the emergency call type, configures the identification information of the emergency call type in the HANDOVER REQUEST message and then sends the configured handover request message between different systems to the source MME, and the identification information of the emergency call included in the message indicates that the UE of this handover is a UE having emergency calls;
step 503: the source MME sends the received handover request message between different systems to the target core network;
step 504: The target-side core network sends the handover request message to the target RAN (Radio Access Network) access device, and the message comprises the identification information of the emergency call to indicate that the UE of this handover is a UE having emergency calls;
step 505: after the target RAN access device receives the handover request message, it knows that the UE of this handover is a UE having emergency calls according to the identification information included in the request message, selects the strategy of the UE having emergency calls and then performs the target-side processing of handover;
step 506: the target RAN access device sends a handover request acknowledge message to the target core network to indicate that the preparations for handover are completed;
step 507: The target core network returns a handover request acknowledge message between different systems to the source MME;
step 508: the source MME sends a HANDOVER COMMAND message between different systems to the source eNodeB to indicate the source eNodeB to start to hand over;
step 509: the source eNodeB sends a RRC connection reconfiguration message to the UE to indicate the UE to leave the source eNodeB and access the target RAN access device.
step 510: the UE sends a RRC connection reconfiguration complete message to the target RAN access device, and the handover succeeds, and the UE continues the emergency call service in the target RAN access device.

Refereing to FIG. 6: it is a flow chart of the process of handing over an emergency call service from other systems to the E-UTRAN system. In this case the source-side handover communication device comprises the source RAN and the source core network. The target-side handover communication device comprises the target MME and the target eNodeB, and the specific process is as follows:
step 601: the UE which is currently performing the emergency call service reports a Measurement Report message to indicate the cell whose signal quality measured by the UE is better than that of the current serving cell;
step 602: the source-side RAN (Radio Access Network) access device determines the target cell according to the measurement report from the UE, and then decides to initiate a handover between different systems, and the source-side RAN access device determines that the type of the UE's current call is the emergency call type, configures identification information of the emergency call type in the HANDOVER REQUEST message and then sends the configured handover request message to the source-side core network, and the message comprises the identification information of the emergency call to indicate that the UE of this handover is a UE having emergency calls;
step 603: the source-side core network sends a handover request message between different systems to the target MME;
step 604: the target MME sends a HANDOVER REQUEST message to the target eNodeB, and the message comprises the identification information of the emergency call;
step 605: after the target eNodeB receives the handover request message, it knows that the UE of this handover is a UE having emergency calls, selects the strategy of the UE having emergency calls to perform the target-side processing of handover;
step 606: the target eNodeB sends a HANDOVER REQUEST ACKNOWLEDGE message to the target MME to indicate that the preparations for handover are completed;
step 607: the target MME feeds back a handover request acknowledge message between different systems to the source core network;
step 608: the source core network sends a handover command message between different systems to the source RAN access device to indicate the source RAN access device to start to hand over;
step 609: the source RAN access device sends the handover signaling on the air interface to the UE, to indicate the UE to leave the source-side RAN access device and access the target eNodeB;
step 610: the UE sends a RRC connection reconfiguration complete message to the target eNodeB, and the handover succeeds, and the UE continues the emergency call service in the target eNodeB side.

It can be seen that, when the type of the call being the preset type is determined through the source-side handover communication device in the present invention, the identification of the type is configured in the handover request message, and the target-side handover communication device obtains the type of the call according to the identification information, and then selects the corresponding handover strategy to avoid the occurrence of the case in which the handover is wrongly rejected because the type of the call cannot be effectively identified, thereby improving the handover success rate.

The present invention is described in further detail with reference to specific embodiments in the above description, but the specific implementation of the present invention cannot be considered to be only limited to these descriptions. For a person of ordinary skill in the art, various simple deduction or replacements may also be made without departing from the concept of the present invention, which should be considered as belonging to the protection scope of the present invention.

### Industrial Applicability

In the source-side and target-side handover communication devices, the communication system and the call handover method of the abovementioned technical solution, the source-side handover communication device determines the type of the call which the user equipment currently needs to hand over, and when determining that the type of the call is the preset type, the source-side handover communication device configures identification information indicating the type of the call in a handover request message and then sends the handover request message to the target-side handover communication device; the target-side handover communication device obtains the type of the call which the user equipment currently needs to hand over according to the request message, and then selects a corresponding handover strategy according to the obtained type, so as to cooperate with the source-side handover communication device to complete the handover. That is, when determining that the type of the call is the preset type, the source-side handover communication device of the above-mentioned technical solution may configure the identification of that type in the handover request message, the target-side handover communication device obtains the type of the call according to the identification information and further selects the corresponding handover strategy, so as to avoid the occurrence of the case in which the handover is wrongly rejected because the type of the call can not be effectively identified, thereby improving the handover success rate. Therefore, the present invention has very strong industrial applicability.

## Claims

1. A source-side handover communication device, wherein the source-side handover communication device is configured to: determine the type of a call which a user equipment currently needs to hand over, when determining that the type of the call is a preset type, configure identification information indicating the type of the call in a handover request message, and then send the handover request message to a target-side handover communication device; control the user equipment to complete a handover after receiving a handover request acknowledge message fed back by the target-side handover communication device.

2. The source-side handover communication device of claim 1, wherein the source-side handover communication device is a source evolved Node B (eNodeB).

3. The source-side handover communication device of claim 1, wherein the source-side handover communication device comprises a source eNodeB and a source mobility management entity, wherein:
the source eNodeB is configured to: determine the type of the call which the user equipment currently needs to hand over, when determining that the type of the call is the preset type, configure the identification information indicating the type of the call in a handover request message, and then send the handover request message to the source mobility management entity; control the user equipment to complete a handover after receiving a handover request acknowledge message sent by the source mobility management entity;
the source mobility management entity is configured to: receive and send the handover request message to the target-side handover communication device; also receive and send a handover request acknowledge message fed back by the target-side handover communication device to the source eNodeB.

4. The source-side handover communication device of claim 1, wherein the source-side handover communication device comprises a source radio access network access device and a source core network, wherein:
the source radio access network access device is configured to: determine the type of the call which the user equipment currently needs to hand over, when determining that the type of the call is the preset type, configure identification information indicating the type of the call in a handover request message, and then send the handover request message to the source core network; control the user equipment to complete a handover after receiving a handover request acknowledge message sent by the source core network;
the source core network is configured to: receive and send the handover request message to the target-side handover communication device, and further receive and send a handover request acknowledge message fed back by the target-side handover communication device to the source radio access network access device.

5. A target-side handover communication device, wherein the target-side handover communication device is configured to: receive a handover request message sent by a source-side handover communication device, obtain the type of a call which a user equipment currently needs to hand over according to the request message, select a corresponding handover strategy according to the obtained type, and send a handover request acknowledge message to the source-side handover communication device.

6. The target-side handover communication device of claim 5, wherein the target-side handover communication device is a target evolved Node B (eNodeB).

7. The target-side handover communication device of claim 5, wherein the target-side handover communication device comprises a target mobility management entity and a target eNodeB, wherein:
the target mobility management entity is configured to: receive a handover request message sent by the source-side handover communication device and send the received handover request message to the target eNodeB, and also send a handover request acknowledge message sent by the target eNodeB to the source-side handover communication device;
the target eNodeB is configured to: receive the handover request message sent by the target mobility management entity, obtain the type of the call which the user equipment currently needs to hand over according to the request message, select a corresponding handover strategy according to the obtained type, and send a handover request acknowledge message to the source-side handover communication device via the target mobility management entity.

8. The target-side handover communication device of claim 5, wherein the target-side handover communication device comprises a target core network and a target radio access network access device, wherein:
the target core network is configured to: receive the handover request message sent by the source-side handover communication device, and send the received handover request message to the target radio access network access device, also send a handover request acknowledge message sent by the target core network to the source-side handover communication device;
the target radio access network access device is configured to: receive the handover request message sent by the target core network, obtain the type of the call which the user equipment currently needs to hand over according to the request message, select a corresponding handover strategy according to the obtained type, and send a handover request acknowledge message to the source-side handover communication device via the target core network.

9. A communication system, comprising the source-side handover communication device of any one of claims 1-4 and the target-side handover communication device of any one of claims 5-8; the source-side handover communication device communicating with the target-side handover communication device.

10. A call handover method, comprising:
a source-side handover communication device determining the type of a call which a user equipment currently needs to hand over, when determining that the type of the call is a preset type, configuring identification information indicating the type of the call in a handover request message, and sending the handover request message to a target-side handover communication device;
the target-side handover communication device receiving the handover request message, obtaining the type of the call which the user equipment currently needs to hand over according to the request message, selecting a corresponding handover strategy according to the obtained type, and sending a handover request acknowledge message to the source-side handover communication device;
after receiving the handover request acknowledge message fed back by the target-side handover communication device, the source-side handover communication device controlling the user equipment to complete a handover.

11. The call handover method of claim 10, wherein the preset type is an emergency call type, and the identification information is identification information of emergency call.
